# EUROPEAN PATENT SPECIFICATION

(11) **EP 1 338 231 B1**
(45) Date of publication and mention of the grant of the patent: **19.04.2006**
(21) Application number: 03250692.5
(22) Date of filing: 04.02.2003
(51) Int. Cl.: A47J 31/057, A47J 31/46, A47J 31/00

(54) **Method of making coffee and coffee maker**
Verfahren zur Herstellung von Kaffee und Kaffeemaschine
Procédé pour la préparation de café et machine à café

(30) Priority: 19.02.2002 US 78613
(43) Date of publication of application: 27.08.2003
(73) Proprietor: Simatelex Manufactory Company Limited, Chai Wan, Hong Kong (CN)
(72) Inventor: Leung, Chi Wah., C/O Simatelex Manufactory Co.Ltd., Chai Wan, Hong Kong (CN); Fung, Chi Chung, C/O Simatelex Manufactory Co.Ltd, Chai Wan, Hong Kong (CN); Luk, Shek Chuen, C/O Simatelex Manufactory Co.Ltd, Chai Wan, Hong Kong (CN)
(74) Representative: Godwin, Edgar James

(56) References cited:
- EP-A- 0 484 060
- US-B1- 6 224 755

## Description

The invention relates to methods of making coffee and to coffee makers, and in particular to drip-type coffee makers.

One method of making coffee includes passing heated water through coffee grounds in order to infuse the water with coffee flavour and aroma. A common type of coffee maker that employs this method is the so-called "drip-type" coffee maker.

In order to make good coffee the water temperature should be at substantially 95°C for 95% of the brew time, and the water should evenly wet the grounds.

Drip-type coffee makers comprise a water reservoir and a brew basket for receiving coffee grounds. A delivery tube or other water passage takes water from the water reservoir, through an in-line water heater and delivers it to a spreader above coffee grounds in the brew basket. The heated water passes through the coffee grounds and into a carafe. There are two problems associated with the above method.

Firstly, the heated water must pass through delivery tubes and the air gap between the spreader and brew basket before reaching the coffee grounds. During this time substantial heat can be lost from the water, particularly during the early stages of brewing when the delivery tube and air gap have not had time to heat up. Thus, the water temperature in the brew basket will always be lower during the initial stages of the brewing cycle. This lowers the temperature of the final coffee beverage and affects its quality.

Secondly, the spreader attempts to distribute the heated' water evenly over the coffee grounds. However, the heated water generally flows through the centre portion of the brew basket. There is typically less wetting of the coffee grounds at the outer edges of the brew basket. This results in uneven extraction of the coffee grounds and has an adverse affect on the quality of the coffee beverage.

It would be desirable to be able to overcome or ameliorate the above disadvantages, or at least to provide the public with a useful alternative.

US-A-6 224 755 describes a method in accordance with the preamble of claim 1, in which steam is applied to the coffee grounds before hot water is passed through the coffee grounds. This document also discloses a coffee maker in accordance with the preamble of claim 2.

The present invention provides a method of making coffee, as set forth in claim 1, in which steam is introduced into the coffee grounds at the same time that heated water is passed through the coffee grounds.

The invention also provides a coffee makes as set forth in claim 2. According to the invention there is provided a coffee maker including a water reservoir, a brew basket for receiving coffee grounds, an in-line water heater, a first water passage between the reservoir and the brew basket, the first passage passing through the in-line water heater for delivering heated water to the brew basket, and a second water passage between the reservoir and the brew basket, the second passage passing through the in-line water heater. The flow rate in the second passage is controlled so that water from the reservoir is converted into steam for delivery to the brew basket. The steam is released into the lower portion of the brew basket.

Preferably, the steam is released into the brew basket to cause a substantially helical flow path.

Preferably, the brew basket includes a passage for steam communication with the second water passage, the passage having an aperture proximate the base of brew basket.

Preferably, there are two in-line water heaters, one for each water passage.

Further aspects of the invention will become apparent from the following description, which is given by way of example only.

Embodiments of the invention will now be described by way of example only and with reference to the accompanying drawings in which:

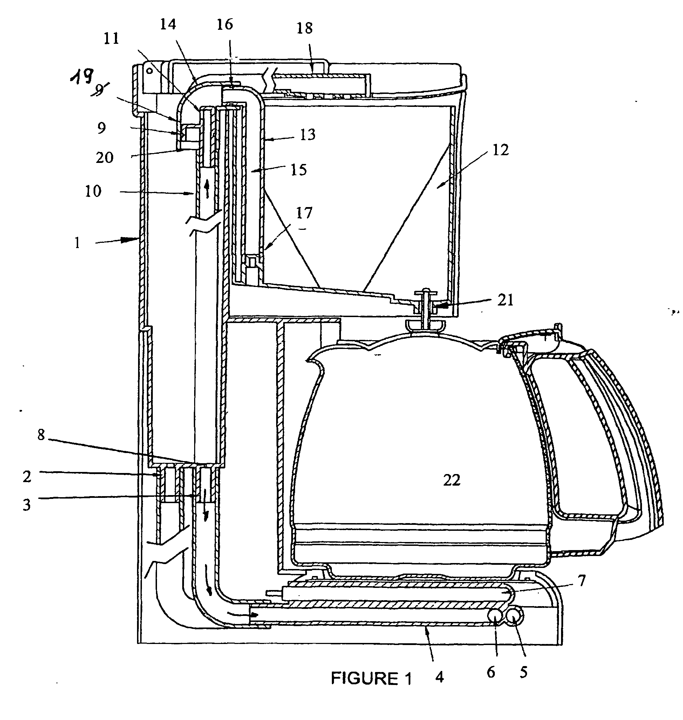

Figure 1 illustrates a sectional view through a drip-type coffee maker according to the invention,
Figure 2 illustrates a detail sectional view through the steam nozzle and brew basket of the coffee maker, and
Figure 3 illustrates the circular helical flow path of the steam in the brew basket.

The invention provides for a method of making coffee in a drip-type coffee maker wherein at least at the same time that (and optionally also before) heated water is passed through the coffee grounds, steam is introduced into the coffee grounds to heat the coffee grounds and to create a stirring motion which causes a more even extraction of the coffee grounds.

A drip-type coffee maker for use in the invention includes a water reservoir 1 for storage of water to be heated. The reservoir 1 has a primary water outlet tube 2 and a secondary water outlet tube 3 at its bottom end.

An in-line water heater 4 doubles as a carafe hot plate 7. The in-line water heater 4 has two heating paths through it for receiving a first water passage 5 from the primary water outlet 2 and a secondary water passage 6 from the secondary water outlet 3.

The first water passage 5 passes through the in-line heater 4 and up to a spreader 18, which is position above a brew basket 12. From the spreader, heated water is distributed over coffee grounds (not shown) in the brew basket in known manner. The water flows through the grounds and infused water drains from the brew basket 12 through an aperture 21 and into a coffee carafe 22.

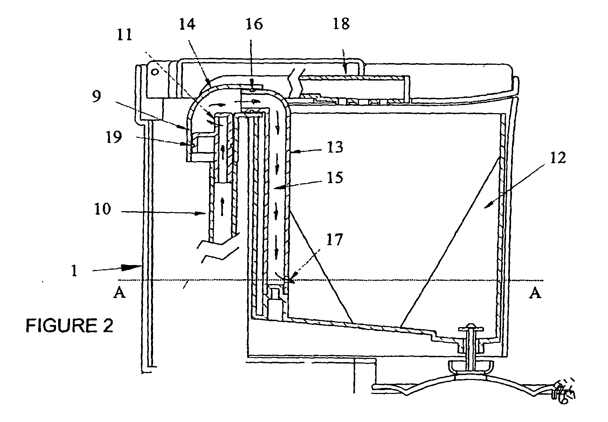

Referring to Figure 2, the brew basket 12 has a steam passage 15 in the form of steam spreader tube 13 down one of its sides. At the lower end of the steam tube 13 is an aperture 17 for the release of steam into the lower portion of the brew basket 12. The aperture 17 is located so that in use it is below the level of coffee grounds in the brew basket 12.

At the top of the brew basket 12 the steam tube 13 is received into an intake tube 14 and sealed therein by an O-ring 16. Steam tube 13 is removably engaged with intake tube 14 so that brew basket 12 can be removed for cleaning.

The second water passage 6 also passes through the in-line heater 4. The secondary outlet 3 only has a small aperture 8 leading from the water reservoir 1. This controls the water flow rate in secondary water passage 6 to a very slow flow rate. Because of the slow flow rate in the secondary water passage 6 the water is turned to steam in in-line heater 4.

A steam delivery tube 10 carries this steam from in-line heater 4 to a steam nozzle 9 received within intake tube 14. An O-ring 19 seals nozzle 9 within intake tube 14.

Steam is released into intake tube 14 through steam aperture 11. The steam can pass through intake tube 14 to steam spreader tube 13 and into the brew basket through lateral aperture 17.

In use, coffee grounds are disposed within the brew basket 12 and will extend to a level above lateral steam aperture 17. The water reservoir 1 is filled with water and the coffee maker is turned on. Water in both water passages 5, 6 heats up. Water in first passage 5 will be heated and will rise up to spreader 18 and be delivered to the coffee grounds in known manner. This hot water flows through the coffee grounds and into the carafe 22 via aperture 21.

At the same time, water in secondary passage 6 is heated, but turns to steam due to the controlled flow rate. The steam rises up delivery tube 10 to intake tube 14 and into steam tube 13 within brew basket 12. Steam is released through steam aperture 17 and into the coffee grounds. The steam acts to introduce additional heat into the coffee grounds to maintain the desired temperature especially during the initially phases of the brewing cycle.

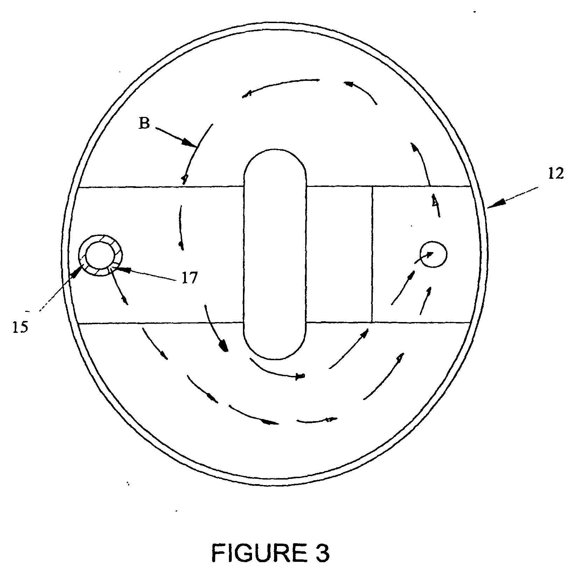

Referring to Figure 3, a plan sectional view on line A-A in Figure 2 is shown. Steam aperture 17 is located in the wall of steam tube 13 so as to cause a helical type steam flow within the brew basket as indicated by the arrows B. This causes a stirring motion through the coffee grounds and results in more even wetting and extraction of the grounds.

By the introduction of the steam into the coffee grounds during the brew cycle the temperature in the coffee grounds is maintain at an optimal temperature for extraction, and the wetted coffee grounds are stirred by the turbulence of the helical steam flow along the walls of the brew basket. This results in more even wetting and extraction of the coffee grounds.

In an alternative embodiment the coffee maker has two separate water heaters: one for heating water in first water passage 5, and a second for creating steam in steam delivery tube 10. Another embodiment has a valve for controlling the rate of water flow in second passage 6. Yet a further embodiment has a controlled valve or other means to delay water flow in first passage 5. This provides for steam heating of the coffee grounds before heated water is allowed pass through the grounds. The provision of such alternative embodiments is within the ability of the skilled addressee.

Where in the foregoing description reference has been made to integers or elements having known equivalents then such are included as if individually set forth herein.

Embodiments of the invention have been described. However it is understood that variations, improvement or modifications can take place without departure from the scope of the appended claims.

## Claims

1. A method of making coffee in a drip-type coffee maker including introducing steam into coffee grounds and passing heated water through the coffee grounds to infuse the water, **characterised in that** steam is introduced into the coffee grounds at the same time that heated water is passed through the coffee grounds.

2. A coffee maker including:
a water reservoir (1);
a brew basket (12) for receiving coffee grounds;
an in-line water heater (4); and
a first water passage (5) between the reservoir (1) and the brew basket (12), the first passage (5) passing through the in-line water heater (4) for delivering heated water to the brew basket (12);
**characterised by** a second water passage (6) between the reservoir (1) and the brew basket (12), the second passage (6) passing through the in-line water heater (4), the flow rate in the second passage (6) in operation of the coffee maker being a controlled flow rate such that water from the reservoir (1) is converted (12) being released into steam for delivery to the brew basket (12), the steam being released into the lower portion of the brew basket (12).

3. A coffee maker as claimed in claim 2, wherein steam is released into the brew basket (12) to cause a substantially helical flow path in operation of the coffee maker.

4. A coffee maker as claimed in claim 2 or 3, wherein the brew basket (12) includes a passage (13) for steam communication with the second water passage (6), the passage (13) having an aperture (17) proximate the base of brew basket (12).

5. A coffee maker as claimed in any of claims 2 to 4, wherein there are two in-line water heaters, one for each water passage (5, 6).

## Patentansprüche

1. Verfahren zur Herstellung von Kaffee in einer Filterkaffeemaschine, das die folgenden Schritte umfasst: Einführen von Wasserdampf in das Kaffeemahlgut; und Leiten von erhitztem Wasser durch das Kaffeemahlgut, um das Wasser aufzugießen, **dadurch gekennzeichnet, dass** der Dampf in das Kaffeemahlgut zum gleichen Zeitpunkt eingeführt wird, zu dem erhitztes Wasser durch das Kaffeemahlgut geleitet wird.

2. Kaffeemaschine, die umfasst:
einen Wasserbehälter (1);
einen Brühkorb (12) für das Aufnehmen des Kaffeemahlgutes;
einen Durchlaufwassererhitzer (4); und
einen ersten Wasserdurchgang (5) zwischen dem Behälter (1) und dem Brühkorb (12), wobei der erste Durchgang (5) durch den Durchlaufwassererhitzer (4) für das Zuführen von erhitztem Wasser zum Brühkorb (12) hindurchgeht;
**gekennzeichnet durch**
einen zweiten Wasserdurchgang (6) zwischen dem Behälter (1) und dem Brühkorb (12), wobei der zweite Durchgang (6) **durch** den Durchlaufwassererhitzer (4) hindurchgeht, wobei die Durchflussgeschwindigkeit im zweiten Durchgang beim Betrieb der Kaffeemaschine eine gesteuerte Durchflussgeschwindigkeit ist, so dass das Wasser vom Behälter (1) in Wasserdampf für eine Zuführung zum Brühkorb (12) umgewandelt wird, wobei der Dampf in den unteren Abschnitt des Brühkorbes (12) freigegeben wird.

3. Kaffeemaschine nach Anspruch 2, bei der Wasserdampf in den Brühkorb (12) freigegeben wird, um einen im Wesentlichen schraubenförmigen Durchflussweg beim Betrieb der Kaffeemaschine zu bewirken.

4. Kaffeemaschine nach Anspruch 2 oder 3, bei der der Brühkorb (12) einen Durchgang (13) für die Wasserdampfverbindung mit dem zweiten Wasserdurchgang (6) umfasst, wobei der Durchgang (13) eine Öffnung (17) in unmittelbarer Nähe der Basis des Brühkorbes (12) aufweist.

5. Kaffemaschine nach einem der Ansprüche 2 bis 4, bei der zwei Durchlaufwassererhitzer vorhanden sind, einer für jeden Wasserdurchgang (5, 6).

## Revendications

1. Procédé de préparation de café dans une cafetière du type à égouttement, englobant les étapes d'introduction de vapeur dans le marc de café, et de passage d'eau chauffée à travers le marc de café pour infuser l'eau, **caractérisé en ce que** la vapeur est introduite dans le marc de café de manière simultanée au passage de l'eau chauffée à travers le marc de café.

2. Cafetière, englobant:
un réservoir d'eau (1);
un panier d'infusion (12) destiné à recevoir le marc de café;
un chauffe-eau en ligne (4); et
un premier passage d'eau (5) entre le réservoir (1) et le panier d'infusion (12), le premier passage (5) traversant le chauffe-eau en ligne (4) pour amener de l'eau chauffée dans le panier d'infusion (12);
**caractérisé par** un deuxième passage d'eau (6) entre le réservoir (1) et le panier d'infusion (12), le deuxième passage (6) traversant le chauffe-eau en ligne (4) et le débit dans le deuxième passage (6), lors du fonctionnement de la cafetière, correspondant à un débit contrôlé, de sorte que l'eau provenant du réservoir (1) est convertie en vapeur en vue d'une amenée vers le panier d'infusion (12), la vapeur étant dégagée dans la partie inférieure du panier d'infusion (12).

3. Cafetière selon la revendication 2, dans laquelle la vapeur est dégagée dans le panier d'infusion (12) pour établir une trajectoire d'écoulement pratiquement hélicoïdale lors du fonctionnement de la cafetière.

4. Cafetière selon les revendications 2 ou 3, dans laquelle le panier d'infusion (12) englobe un passage (13) pour établir une communication de vapeur avec le deuxième passage d'eau (6), le passage (13) comportant une ouverture (17) proche de la base du panier d'infusion (12).

5. Cafetière selon l'une quelconque des revendications 2 à 4, comportant deux chauffe-eau en ligne, un pour chaque passage d'eau (5, 6).
